# EUROPEAN PATENT APPLICATION

(11) **EP 4 559 676 A1**
(43) Date of publication of application: **28.05.2025**
(21) Application number: 23842919.5
(22) Date of filing: 13.07.2023
(51) Int. Cl.: B32B 27/28, B32B 27/32, B65D 65/40

(54) **MULTILAYER STRUCTURE, CONTAINER, AND FOOD PACKAGING CONTAINER**

(30) Priority: 19.07.2022 JP 2022114616; 26.12.2022 JP 2022208429; 26.12.2022 JP 2022208430
(71) Applicant: Mitsubishi Chemical Corporation, Tokyo 100-8251 (JP)
(72) Inventor: OURA Kohei, Tokyo 100-8251 (JP); TOMITA Yuuko, Tokyo 100-8251 (JP)
(74) Representative: Vossius & Partner Patentanwälte Rechtsanwälte mbB
(86) International application number: PCT/JP2023/025945
(87) International publication number: WO 2024/018996

(57) **Abstract**

The following is provided as a multilayer structure including an ethylene-vinyl alcohol copolymer layer (A) and a polyethylene resin layer (B), the multilayer structure having excellent image clarity. Namely, provided is a multilayer structure including the ethylene-vinyl alcohol copolymer layer (A) and the polyethylene resin layer (B), in which a density of a polyethylene resin contained in the polyethylene resin layer (B) is from 0.850 to 0.920 g/cm³, the polyethylene resin in the polyethylene resin layer (B) has a content greater than 80% by mass, and the multilayer structure has an impact strength A equal to or greater than 350 g, and the impact strength A is a value determined by a dart impact method A and calculated in accordance with JIS K7124-1.

## Description

### Technical Field

The present disclosure relates to a multilayer structure having excellent image clarity. The multilayer structure includes an ethylene-vinyl alcohol copolymer (hereinafter, may be referred to as "EVOH") layer (A) and a polyethylene resin layer (B).

### Background Art

EVOH exhibits a very strong intermolecular force due to hydrogen bonding between hydroxyl groups present in the polymer side chains. Furthermore, EVOH also exhibits high crystallinity and, even in an amorphous portion, possesses high intermolecular force. Therefore, gas molecules or the like do not easily pass through a film formed of EVOH, and thus such a film exhibits excellent gas barrier properties. Hence, in a wide range of fields such as food packaging, EVOH is used in a gas barrier layer for imparting gas barrier properties to a multilayer structure including a polyethylene resin layer, such as a film or a container.

For example, JP 2021-53993 A discloses a multilayer structure including a surface resin layer, a base material, a gas barrier layer, and a heat seal layer. The surface resin layer, the base material, and the heat seal layer and made of polyethylene, and yje gas barrier layer is made of EVOH.

### Summary of Disclosure

### Technical Problem

Multilayer structures in the related art including an EVOH layer and a polyethylene resin layer have room for improvement in terms of image clarity.

Thus, the present disclosure has been developed in view of such an issue, and provides a multilayer structure including an EVOH layer and a polyethylene resin layer, and having excellent image clarity.

### Solution to Problem

The present inventors conducted intensive studies to solve the above issue, and as a result, discovered that for a multilayer structure including an EVOH layer and a polyethylene resin layer, setting the multilayer structure having an impact strength and the like in a specific range can improve the image clarity of the multilayer structure.

That is, the present disclosure provides the following aspects [1] to [10].
[1] A multilayer structure including:
   an ethylene-vinyl alcohol copolymer layer (A); and
   a polyethylene resin layer (B),
   in which
   the polyethylene resin layer (B) comprises a polyethylene resin having a density of 0.850 to 0.920 g/cm³,
   the polyethylene resin in the polyethylene resin layer (B) has a content greater than 80 mass%, and
   the multilayer structure has an impact strength A equal to or greater than 350 g, the impact strength A being a value determined by a dart impact method A and calculated in accordance with JIS K7124-1.
[2] A multilayer structure including:
   an ethylene-vinyl alcohol copolymer layer (A); and
   a polyethylene resin layer (B),
   in which
   the polyethylene resin layer (B) comprises a polyethylene resin having a density of 0.850 to 0.920 g/cm³,
   the polyethylene resin in the polyethylene resin layer (B) has a content greater than 80 mass%, and
   the polyethylene resin contained in the polyethylene resin layer (B) has a weight average molecular weight of 230000 or greater when calibrated with polystyrene.
[3] A multilayer structure including:
   an ethylene-vinyl alcohol copolymer layer (A); and
   a polyethylene resin layer (B),
   in which
   the polyethylene resin layer (B) comprises a polyethylene resin having a density of 0.850 to 0.920 g/cm³,
   the polyethylene resin in the polyethylene resin layer (B) has a content greater than 80 mass%, and
   the polyethylene resin layer (B) has an impact strength B equal to or greater than 500 g, the impact strength B being a value determined by a dart impact method B including subjecting a test piece made of a single-layer film having a thickness of 30 µm and a composition that is the same as that of the polyethylene resin layer (B) to a measurement in accordance with JIS K7124-1.
[4] The multilayer structure according to any of [1] to [3], in which the polyethylene resin is a linear low-density polyethylene.
[5] The multilayer structure according to any of [1] to [4], in which the polyethylene resin includes a copolymerization component, and the copolymerization component includes 4 or more carbon atoms.
[6] The multilayer structure according to any of [1] to [5], further including an adhesive resin layer (C).
[7] The multilayer structure according to any of [1] to [6], further including another layer (D) on at least one of outermost layers of the multilayer structure, in which the polyethylene resin layer (B) is provided between the additional layer (D) and the ethylene-vinyl alcohol copolymer layer (A).
[8] The multilayer structure according to any of [1] to [7], in which the multilayer structure includes no layer containing, as a main component, a polyamide resin.
[9] A container including the multilayer structure according to any of [1] to [8].
[10] A food packaging container including the multilayer structure according to any of [1] to [8].

### Advantageous Effects of Disclosure

According to an embodiment of the present disclosure, a multilayer structure including an EVOH layer (A) and a polyethylene resin layer (B) can be provided with excellent image clarity by ensuring that a density of a polyethylene resin contained in the polyethylene resin layer (B) is in a range from 0.850 to 0.920 g/cm³, the polyethylene resin in the polyethylene resin layer (B) has a content greater than 80 mass%, and the multilayer structure has specific physical properties.

### Description of Embodiments

Hereinafter, embodiments of the present disclosure will be described in detail. However, the present disclosure is not limited to the following description and can be carried out with optional modifications within a scope that does not depart from the gist of the present disclosure. In the present specification, when numerical values or physical property values are expressed before and after "to" in the description of a range, the values before and after "to" are included in the range.

Hereinafter, a monomer unit contained in a copolymer resin may be simply referred to as a "unit". For example, a monomer unit on ethylene may be referred to as an "ethylene unit".

A multilayer structure according to one embodiment of the present disclosure (hereinafter, may be referred to as "the present multilayer structure") includes an EVOH layer (A) and a polyethylene resin layer (B), in which a density of a polyethylene resin contained in the polyethylene resin layer (B) is from 0.850 to 0.920 g/cm³, the polyethylene resin in the polyethylene resin layer (B) has a content greater than 80 mass%, and the multilayer structure has the specific physical properties described below.

Hereinafter, each constituent element will be described.

### EVOH Layer (A)

The EVOH layer (A) is formed of a resin composition containing EVOH. EVOH is usually a resin that is produced by saponification of an ethylene-vinyl ester copolymer, which is a copolymer of ethylene and a vinyl ester monomer. EVOH is a water-insoluble thermoplastic resin. Note that a plurality of EVOH layers (A) may be provided in the multilayer structure.

The content of EVOH in the EVOH layer (A) is not particularly limited, but EVOH is preferably the main component (that is, the content of EVOH contained in the EVOH layer (A) is 50 mass% or greater). The content of EVOH in the EVOH layer (A) is more preferably 60 mass% or greater, further preferably 70 mass% or greater, and particularly preferably 80 mass% or greater, 90 mass% or greater, 95 mass% or greater, or 100 mass%.

The EVOH layer (A) may contain a component in addition to EVOH as long as the effects of the present disclosure are not impaired. For example, the EVOH layer (A) may contain an additional component such as an anti-blocking agent, a processing aid, a resin other than EVOH, a carboxylic acid compound, a phosphoric acid compound, a boron compound, a metal salt, a stabilizer, an antioxidant, an ultraviolet absorber, a plasticizer, an antistatic agent, a lubricant, a colorant, a filler, a surfactant, a desiccant, a crosslinking agent, and a reinforcing agent such as various fibers. One of these may be used alone or two or more thereof may be used in combination.

### EVOH

EVOH is usually a resin that is produced by saponification of an ethylene-vinyl ester copolymer, which is a copolymer of ethylene and a vinyl ester monomer, and is a water-insoluble thermoplastic resin. As the vinyl ester monomer, vinyl acetate is generally used from an economical perspective. Polymerization of ethylene and the vinyl ester monomer can be carried out by any known polymerization method. For example, solution polymerization, suspension polymerization, or emulsion polymerization can be used, but solution polymerization using methanol as a solvent is generally used. The resulting ethylene-vinyl ester copolymer can also be saponified by a known method. The EVOH thus produced is mainly composed of an ethylene-derived structural unit and a vinyl alcohol structural unit, and usually contains a small amount of a vinyl ester structural unit that remains without being saponified.

As the vinyl ester monomer, vinyl acetate is typically used from the viewpoint of good market availability and good impurity treatment efficiency during production. Examples of another vinyl ester monomer include an aliphatic vinyl ester such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate. An aliphatic vinyl ester having usually from 3 to 20 carbon atoms, preferably from 4 to 10 carbon atoms, or particularly preferably from 4 to 7 carbon atoms can be used. One of these may be used alone or two or more thereof may be used in combination.

EVOH is usually made from a petroleum-derived raw material such as naphtha, but may also be made from a natural gas-derived raw material such as shale gas, or a plant-derived raw material refined from a component such as sugar and starch contained in sugarcane, sugar beet, corn, potatoes and the like, or from a component such as cellulose contained in a plant such as rice, wheat, and millet.

The content of the ethylene unit in the EVOH can be controlled by the pressure of ethylene when the vinyl ester monomer and ethylene are copolymerized, and is preferably from 20 to 60 mol%. The content of the ethylene unit in the EVOH is more preferably from 25 to 55 mol%, even more preferably from 30 to 50 mol%, particularly preferably from 35 to 45 mol%, and especially preferably from 38 to 45 mol%. Further, the EVOH layer (A) preferably contains EVOH having an ethylene unit content of 38 mol% or greater from the viewpoint of further improving mechanical properties and secondary moldability. When the content of the ethylene unit is too low, the gas barrier properties and melt moldability under high humidity conditions tend to decrease, and conversely, when the content of the ethylene unit is too high, the gas barrier properties tend to decrease. The content of the ethylene unit can be measured based on, for example, ISO 14663.

A degree of saponification of the vinyl ester component in the EVOH can be controlled by factors such as the amount of a saponification catalyst (usually an alkaline catalyst such as sodium hydroxide is used), temperature, time, and the like when saponifying the ethylene-vinyl ester copolymer. From the viewpoints of gas barrier properties, thermal stability and moisture resistance, the degree of saponification is preferably 80 mol% or greater, more preferably 90 mol% or greater, still more preferably 98 mol% or greater, and particularly preferably 99 mol% or greater, and may be 100 mol%.

The degree of saponification of the vinyl ester unit of the EVOH is a value that is measured based on JIS K6726 (provided that EVOH is uniformly dissolved in a water-methanol solvent to form a solution).

The melt flow rate (MFR) (at 210°C and a load of 2160 g) of EVOH is usually from 0.5 to 100 g/10 minutes, preferably from 1 to 50 g/10 minutes, and particularly preferably from 3 to 35 g/10 minutes. When the MFR is too high, the film-forming property tends to be unstable, and when the MFR is too low, the viscosity tends to be too high, resulting in difficulty in carrying out melt extrusion.

The MFR is an index of the degree of polymerization of the EVOH, and can be adjusted by the amount of a polymerization initiator or the amount of a solvent when ethylene and a vinyl ester monomer are copolymerized.

The EVOH may be copolymerized with a polymerizable monomer besides ethylene and vinyl ester within a range such that the effects of the present disclosure are not inhibited, that is, generally within a range of 5 mol% or less. Examples of such a polymerizable monomer include an α-olefin such as propylene, isobutene, α-octene, α-dodecene, and α-octadecene; a hydroxy group-containing α-olefin such as 3-buten-1-ol, 4-penten-1-ol, and 3-butene-1,2-diol, and hydroxy group-containing α-olefin derivatives such as an esterified product and an acylated product thereof; hydroxymethylvinylidene diacetates such as 1,3-diacetoxy-2-methylenepropane, 1,3-dipropionyloxy-2-methylenepropane, and 1,3-dibutyronyloxy-2-methylenepropane; an unsaturated carboxylic acid or a salt thereof, a partial alkyl ester, a complete alkyl ester, a nitrile, an amide, or an anhydride thereof; an unsaturated sulfonic acid or a salt thereof; a vinylsilane compound; vinyl chloride; and styrene. One of these may be used alone or two or more thereof may be used in combination.

As the EVOH used in an embodiment of the present disclosure, an EVOH having a primary hydroxyl group in a side chain may be optionally used. Examples of the EVOH having a primary hydroxyl group in a side chain thereof include EVOH copolymerized with a hydroxyl group-containing α-olefin and EVOH having a 1,2-diol structure in a side chain.

When the EVOH having a primary hydroxyl group in a side chain is used, the structural unit derived from the monomer having a primary hydroxyl group has a content preferably from 0.1 to 20 mol%, more preferably from 0.5 to 15 mol%, and particularly preferably from 1 to 10 mol% of the EVOH.

In an embodiment of the present disclosure, an EVOH having no primary hydroxyl group in a side chain is preferable from the viewpoint of image clarity.

Further, as the EVOH, an EVOH that has been subjected to a "post-modification" treatment such as urethanization, acetalization, cyanoethylation, or oxyalkylenation can also be used.

A single type of EVOH may be used alone, or two or more types of EVOHs having different kinds of vinyl esters, different ethylene unit contents, and different physical properties, or the like may be mixed and used.

Note that from the viewpoint of miscibility, it is preferable that only one type of EVOH be used, but when a plurality of types of EVOH are used, the plurality of types of EVOH preferably all have melting points of 170°C or higher or all have melting points less than 170°C.

In the present disclosure, the melting point of the sample is measured according to a method described in JIS K7121. In this measurement, the sample is placed in a differential scanning calorimeter (DSC) and the temperature is increased to 200°C then reduced, at a cooling rate of 30°C/min, to a temperature that is approximately 50°C lower than the glass-transition temperature, and then once again increased at a temperature increase rate of 10°C/min (second run). Thus, the melting point is determined.

### Polyethylene Resin Layer (B)

The present multilayer structure includes a polyethylene resin layer (B). The polyethylene resin layer (B) is a layer formed of a resin composition containing a polyethylene resin having a specific density. A plurality of polyethylene resin layers (B) may be provided in the multilayer structure.

The density of the polyethylene resin is from 0.850 to 0.920 g/cm³, preferably from 0.860 to 0.920 g/cm³, more preferably from 0.870 to 0.920 g/cm³, and even more preferably from 0.880 to 0.920 g/cm³. When the density is within the above range, the effects of the present disclosure can be achieved. The density can be measured by a densitometer.

The polyethylene resin is not particularly limited as long as the resin has the abovementioned density, and specific examples of the polyethylene resin include a polyethylene resin in a broad sense, including a polyethylene resin such as linear low-density polyethylene, low-density polyethylene, ultra low-density polyethylene, medium-density polyethylene, high-density polyethylene, an ethylene-propylene (block or random) copolymer, and an ethylene-α-olefin (an α-olefin having from 4 to 20 carbon atoms) copolymer; and a modified polyethylene resin such as an unsaturated carboxylic acid-modified polyethylene resin in which any of the foregoing polyethylenes is graft-modified with an unsaturated carboxylic acid or an ester thereof; and combinations thereof. Among these, linear low-density polyethylene is preferable because the impact strength can be easily adjusted. The raw material of the polyethylene resin may be petroleum-derived or plant-derived. The polyethylene resin preferably does not contain halogenated polyethylene.

The polyethylene resin may be a homopolymer resin of ethylene or a copolymer resin. When the polyethylene resin is a copolymer resin, a copolymerization component having a large number of carbon atoms can increase the impact strength. Examples of the copolymerization component besides ethylene include an α-olefin having preferably 4 or more carbon atoms, more preferably 6 or more carbon atoms, and even more preferably 8 or more carbon atoms. Specific examples thereof include butene, hexene, and octene, and hexene and octene are preferable. The number of carbon atoms in the copolymerization component can be measured by C-NMR.

When the polyethylene resin is a copolymer resin, the impact strength tends to be increased by increasing a proportion of the copolymerization component. The proportion of the copolymerization component is preferably 0.5 mol% or greater, more preferably 1 mol% or greater, still more preferably 2 mol% or greater, and particularly preferably 3 mol% or greater. The upper limit is usually 20 mol%. The proportion of the copolymerization component can be measured by NMR.

The weight average molecular weight of the polyethylene resin is, when calibrated with polystyrene, preferably 230000 or greater, more preferably 235000 or greater, still more preferably 240000 or greater, particularly preferably 245000 or greater, especially preferably 250000 or greater, and most preferably 253000 or greater. The upper limit is not particularly limited, but is usually 400000. When the weight average molecular weight of the polyethylene resin is 230000 or greater when calibrated with polystyrene, a multilayer structure having excellent image clarity tends to be formed. The molecular weight of the polyethylene resin can be measured by gel permeation chromatography (GPC).

A melt flow rate (MFR, measured according to JIS K7210:2014 at 190°C with a load of 2160 g) of the polyethylene resin is not particularly limited, but is usually from 0.01 to 50 g/10 minutes and more preferably from 0.1 to 10 g/10 minutes from the viewpoint of moldability. The MFR can be measured using a melt indexer.

Examples of commercially available products of the polyethylene resin preferable in an embodiment of the present disclosure include INNATE (trade name) available from The Dow Chemical Company and EXCEED (trade name) available from Exxon Mobil Corporation.

The polyethylene resin in the polyethylene resin layer (B) has a content greater than 80 mass%, preferably 85 mass% or greater, more preferably 90 mass% or greater, and particularly preferably 95 mass% or greater. When the content of the polyethylene resin is within the above range, the effect of the present disclosure can be achieved.

The polyethylene resin layer (B) may contain a component in addition to the polyethylene resin as long as the effects of the present disclosure are not impaired (for example, the additional component has a content less than 20 mass% in the polyethylene resin layer (B)). The polyethylene resin layer (B) may contain, as the component in addition to the polyethylene resin, for example, another component such as an anti-blocking agent, a processing aid, a resin other than the polyethylene resin, a carboxylic acid compound, a phosphoric acid compound, a boron compound, a metal salt, a stabilizer, an antioxidant, an ultraviolet absorber, a plasticizer, an antistatic agent, a lubricant, a colorant, a filler, a surfactant, a desiccant, a crosslinking agent, and a reinforcing agent such as various fibers. One of these may be used alone or two or more thereof may be used in combination.

Examples of the resin other than the polyethylene resin that may be contained in the polyethylene resin layer (B) include a polypropylene resin such as polypropylene and a propylene-α-olefin (an α-olefin having from 4 to 20 carbon atoms) copolymer, polybutene, polypentene and the like, a cyclic olefin resin, an ionomer, an ethylene-vinyl acetate copolymer, an ethylene-acrylic acid copolymer, an ethylene-acrylate copolymer, a polyester resin, a polyamide resin (including a copolymerized polyamide), polyvinyl chloride, polyvinylidene chloride, an acrylic resin, polystyrene, a vinyl ester resin, a polyester elastomer, a polyurethane elastomer, a halogenated polyolefin such as chlorinated polyethylene and chlorinated polypropylene, aromatic or aliphatic polyketones, and combinations thereof. From the viewpoint of recyclability, the resin other than the polyethylene resin preferably does not contain a polyamide resin as a main component.

The impact strength (referred to as the "impact strength B") of the polyethylene resin layer (B) formed of a resin composition containing these components is not particularly limited, but is preferably 500 g or greater, more preferably 600 g or greater, still more preferably 700 g or greater, particularly preferably 800 g or greater, and especially preferably 900 g or greater. The upper limit is not particularly limited, but is usually 10000 g, preferably 9000 g or less, more preferably 7000 g or less, still more preferably 5000 g or less, and particularly preferably 3000 g or less.

When the impact strength B of the polyethylene resin layer (B) is 500 g or greater, a multilayer structure having more excellent image clarity tends to be formed.

The impact strength B is a value (g) determined by a dart impact method B and measured by using, in accordance with JIS K7124-1, a test piece made of a single-layer film having a thickness of 30 µm and a composition that is the same as that of the polyethylene resin layer (B).

Since the impact strength B is affected by the surface state of the film, it is presumed that when the impact strength B is within the above range, the polyethylene resin layer (B) can form a smoother surface and thereby enhance the effects of the present disclosure.

Examples of means for adjusting the impact strength B include a method of adjusting the molecular weight or molecular weight distribution of the polyethylene resin contained in the polyethylene resin layer (B), and when the polyethylene resin is a copolymer resin, adjusting the number of carbon atoms of the copolymerization component or the proportion of the copolymerization component.

### Adhesive Resin Layer (C)

The present multilayer structure preferably includes an adhesive resin layer (C). The adhesive resin layer (C) contains an adhesive resin and may be provided, for example, as a layer for adhering the EVOH layer (A) and the polyethylene resin layer (B) together. The adhesive resin layer (C) may be provided as a single layer or as a plurality of layers in the multilayer structure.

The adhesive resin constituting the adhesive resin layer (C) is not particularly limited, and examples thereof include a carboxyl group-containing modified polyolefin polymer produced by chemically bonding an unsaturated carboxylic acid or an anhydride thereof to a polyolefin resin by an addition reaction, a graft reaction, or the like. Examples of the carboxyl group-containing modified polyolefin polymer include a maleic anhydride-modified polymer such as modified polyethylene grafted with maleic anhydride, modified polypropylene grafted with maleic anhydride, a modified ethylene-propylene (block and random) copolymer grafted with maleic anhydride, a modified ethylene-ethyl acrylate copolymer grafted with maleic anhydride, a modified ethylene-vinyl acetate copolymer grafted with maleic anhydride, a modified polycyclic olefin resin grafted with maleic anhydride, and a modified polyolefin resin grafted with maleic anhydride.

One of these may be used alone or two or more thereof may be used as a mixture.

The melt flow rate (MFR, measured according to JIS K7210:2014 at 190°C with a load of 2160 g) of the adhesive resin constituting the adhesive resin layer (C) is not particularly limited, but is preferably from 0.1 to 20.0 g/10 min, and more preferably from 1.0 to 10.0 g/10 min. When the MFR of the adhesive resin is in the above range, the molding stability tends to be further improved.

As the adhesive resin, a maleic anhydride-modified polymer such as maleic anhydride-modified polyethylene and a maleic anhydride-modified ethylene-α-olefin copolymer is particularly preferable from the viewpoint that such a polymer contributes not only to the adhesiveness of the resin but also contributes to the effect of suppressing gel formation during melting and heating and the effect of suppressing a decrease in transparency.

The acid value of the maleic anhydride-modified polymer is usually 50 mgKOH/g or less, preferably 30 mgKOH/g or less, and particularly preferably 20 mgKOH/g or less. When the acid value is too high, there is a tendency for the number of reaction sites with the hydroxyl group in the EVOH to increase, for a highly polymerized product to be formed in the melt-kneading process, and for the stability during extrusion to decrease, thereby making it difficult to obtain a favorable molded product. The lower limit of the acid value is usually 1 mgKOH/g, and is preferably 2 mgKOH/g or greater. Note that, the acid value is measured in accordance with JIS K0070.

When maleic anhydride-modified polyethylene is used as the maleic anhydride-modified polymer, the MFR (190°C, load of 2160 g) is usually from 0.01 to 150 g/10 minutes, preferably from 0.1 to 50 g/10 minutes, more preferably from 1 to 25 g/10 minutes, and even more preferably from 3 to 10 g/10 minutes.

When a maleic anhydride-modified ethylene-α-olefin copolymer is used as the maleic anhydride-modified polymer, the MFR (230°C, load of 2160 g) is usually from 0.1 to 150 g/10 minutes, preferably from 0.5 to 100 g/10 minutes, more preferably from 1 to 50 g/10 minutes, and even more preferably from 5 to 35 g/10 minutes. If the MFR is too high or too low, molding defects tend to occur when a multilayer structure is molded, which is not preferable.

Note that, as appropriate, any additive may be blended into the adhesive resin layer (C) as long as the effects of the present disclosure are not impaired. Examples of such an additive include a heat stabilizer, an ultraviolet absorber, a light stabilizer, an antioxidant, an antistatic agent, a neutralizing agent, a rust inhibitor, and a pigment. One of these may be used alone or two or more thereof may be used in combination.

In addition, a resin composition for forming the adhesive resin layer (C) can be prepared by mixing the adhesive resin and an optional additive.

A content of the adhesive resin in the adhesive resin layer (C) is not particularly limited, but the adhesive resin is preferably the main component (that is, the content of the adhesive resin contained in the adhesive resin layer (C) is 50 mass% or greater). The content of the adhesive resin is more preferably 60 mass% or greater, still more preferably 70 mass% or greater, and particularly preferably 80 mass% or greater, 90 mass% or greater, 95 mass% or greater, or 100 mass%.

### Additional Layer (D)

The present multilayer structure may include an additional layer (D) in addition to the above layers (A) to (C). Examples of the additional layer (D) include a base material layer for adding strength and the like to the multilayer structure.

### Base Material Layer

Various thermoplastic resins (hereinafter, referred to as "base material resins") are used as a material for use in the base material layer. In addition, a recycled resin produced by remelting and molding an end portion, a defective product, or the like generated in the process of manufacturing the present multilayer structure may be used. Such recycled resin includes a mixture of the EVOH layer (A), the polyethylene resin layer (B), the adhesive resin layer (C), and the additional layer (D).

Examples of the base material resin used in the base material layer include a polyethylene resin such as linear low-density polyethylene, low-density polyethylene, ultra low-density polyethylene, medium density polyethylene, high density polyethylene, an ethylene-propylene (block and random) copolymer, and an ethylene-α-olefin (an α-olefin having from 4 to 20 carbon atoms) copolymer; a polypropylene resin such as polypropylene and a propylene-α-olefin (an α-olefin having from 4 to 20 carbon atoms) copolymer; a polyolefin resin in a broad sense including an (unmodified) polyolefin resin such as polybutene and polypentene, and a modified olefin resin such as an unsaturated carboxylic acid-modified polyolefin resin in which any of these polyolefins is graft-modified with an unsaturated carboxylic acid or an ester thereof; a cyclic olefin resin; an ionomer; an ethylene-vinyl acetate copolymer; an ethylene-acrylic acid copolymer; an ethylene-acrylate copolymer; a polyester resin; a polyamide resin (including copolymerized polyamide); polyvinyl chloride; polyvinylidene chloride; acrylic resin; polystyrene; a vinyl ester resin; a polyester elastomer; a polyurethane elastomer; a halogenated polyolefin such as chlorinated polyethylene and chlorinated polypropylene; aromatic or aliphatic polyketones; and combinations thereof.

A known plasticizer, filler, clay (montmorillonite or the like), colorant, antioxidant, antistatic agent, lubricant, nucleating agent, anti-blocking agent, ultraviolet absorber, wax, or the like can be blended into the thermoplastic resin of the base material layer within a range that does not impede the spirit of the present disclosure (for example, 30 mass% or less, and preferably 10 mass% or less).

### Multilayer Structure

The present multilayer structure includes an EVOH layer (A) and a polyethylene resin layer (B).

The present multilayer structure need only include the EVOH layer (A) and the polyethylene resin layer (B), and other layer configurations thereof are not particularly limited. Examples of other layer configurations include an (A/C/B) structure in which the polyethylene resin layer (B) is laminated to the EVOH layer (A) with the polyethylene resin layer (B) and the EVOH layer (A) sandwiching the adhesive resin layer (C), and a (B/C/A/C/B) structure in which the polyethylene resin layer (B) is laminated to both sides of the EVOH layer (A) with the polyethylene resin layer (B) and the EVOH layer (A) sandwiching the adhesive resin layer (C).

In an embodiment of the present disclosure, an additional layer (D) may be provided between these layers or on an outermost layer of the multilayer structure.

Among these configurations, preferably, the multilayer structure further includes an additional layer (D) on at least one of the outermost layers, and the polyethylene resin layer (B) is provided between the additional layer (D) and the EVOH layer (A).

Note that from the viewpoint of recyclability, the present multilayer structure preferably does not include a polyamide layer (a layer containing polyamide, a layer containing polyamide as a main component, or a layer composed of polyamide).

Lamination of the multilayer structure can be carried out by a known method. Examples of such known lamination methods include a method in which the adhesive resin layer (C) and the polyethylene resin layer (B) are melt-extrusion-laminated to a film, a sheet, or the like serving as the EVOH layer (A), a method in which, conversely, a resin composition that is used to form the EVOH layer (A) is melt-extrusion-laminated to the adhesive resin layer (C) or the polyethylene resin layer (B), and a method in which the three layers of (A), (B) and (C) are co-extruded. Another example is a method in which a solution of the resin composition that is used to form the EVOH layer (A) is applied onto the polyethylene resin layer (B) provided with the adhesive resin layer (C), after which the solvent is removed. Among these method, the co-extrusion method is preferable from the viewpoints of cost and the environment.

In addition, when the present multilayer structure includes at least one other layer (D), a production method like those described below can be used, for example.

(i) A method in which all layers are laminated and formed by co-extruding a resin constituting the EVOH layer (A) and the polyethylene resin layer (B) and, if necessary, a resin constituting the adhesive resin layer (C) and a resin constituting the additional layer (D);
(ii) a formation method in which a separately formed film, sheet or the like serving as the additional layer (D) is dry-laminated with a multilayer structure including the EVOH layer (A), the polyethylene resin layer (B) and, as necessary, the adhesive resin layer (C);
(iii) a method in which a resin constituting the EVOH layer (A) and the polyethylene resin layer (B) and, if necessary, a resin constituting the adhesive resin layer (C) are melt-co-extruded and laminated onto the surface of a separately formed film, sheet, or the like serving as the additional layer (D) or onto the surface of a laminate in which these are appropriately combined serving as the additional layer (D); and
(iv) a method in which a solution of a resin for forming the additional layer (D) is applied to a multilayer structure including the EVOH layer (A), the polyethylene resin layer (B) and, as necessary, the adhesive resin layer (C), after which the solvent is removed.

Among these methods, the method (i) is preferable from the viewpoint of productivity.

The impact strength (referred to as the "impact strength A") of the present multilayer structure produced in this manner is not particularly limited, but is preferably 350 g or greater, more preferably 370 g or greater, even more preferably 390 g or greater, and particularly preferably 410 g or greater. The upper limit is not particularly limited, but is usually 10000 g, preferably 9000 g or less, more preferably 7000 g or less, still more preferably 5000 g or less, and particularly preferably 3000 g or less. The impact strength A is a value determined by a dart impact method A and measured by using, in accordance with JIS K7124-1, a test piece made of the multilayer structure.

Note that the impact strength A is preferably a value determined by the dart impact method A and measured by using, in accordance with JIS K7124-1, a test piece made of a multilayer film of the polyethylene resin layer (B) (40 µm) / an adhesive resin layer (5 µm) made of MODIC (trade name) M512 / an EVOH layer (10 µm) made of SOARNOL (trade name) ET3803RB / an adhesive resin layer (5 µm) made of MODIC (trade name) M512 / and the polyethylene resin layer (B) (40 µm).

Since the impact strength A is affected by the surface state of the film and the interface state between the layers of the multilayer structure, it is presumed that when the impact strength A is within the above range, the multilayer structure can form a smooth surface and thereby enhance the effects of the present disclosure.

A thickness of the multilayer structure is not particularly limited, but is usually from 5 to 300 µm, preferably from 20 to 200 µm, and particularly preferably from 50 to 150 µm.

A thickness of each layer of the multilayer structure is not particularly limited, but a thickness of the EVOH layer (A) is preferably from 1 to 50 µm, and more preferably from 2 to 30 µm. A thickness of the polyethylene resin layer (B) is preferably from 5 to 200 µm, and more preferably from 10 to 100 µm. When the thickness of the polyethylene resin layer (B) is within the above range, the effects of the present disclosure can be enhanced. A thickness of the adhesive resin layer (C) is preferably from 1 to 50 µm, and more preferably from 2 to 20 µm. When a plurality of layers is present, the total thickness of the plurality of layers is preferably within the above-mentioned thickness range.

A ratio A/B of the thickness of the EVOH layer (A) to the thickness of the polyethylene resin layer (B) (both being thicknesses of a single layer) is usually from 1/50 to 10/1, preferably from 1/30 to 5/1, and particularly preferably from 1/10 to 3/1. When the ratio A/B is too small, the gas barrier properties tend to be insufficient, whereas when the ratio A/B is too large, the film tends to be brittle.

A ratio A/C of the thickness of the EVOH layer (A) to the thickness of the adhesive resin layer (C) (both being thicknesses of a single layer) is usually from 1/10 to 10/1, preferably from 1/5 to 5/1, and particularly preferably from 1/3 to 3/1. When the ratio A/C is too small, the gas barrier properties tend to be insufficient, whereas when the ratio A/C is too large, the adhesiveness tends to be insufficient.

The multilayer structure may be subjected to a stretching treatment (with heating) as necessary. The stretching treatment may be either uniaxial stretching or biaxial stretching, and in the case of biaxial stretching, the stretching may be simultaneous stretching or sequential stretching. Among stretching methods such as a roll stretching method, a tenter stretching method, a tubular stretching method, a stretch blowing method, and a vacuum pressure forming method, a method having a high stretching ratio can also be employed. The stretching temperature, which is a temperature in the vicinity of the melting point of the multilayer structure, is usually selected from an approximately of from 40 to 170°C and preferably from 60 to 160°C. When the stretching temperature is too low, the stretchability tends to be poor, and when the stretching temperature is too high, maintaining a stable stretched state tends to be difficult.

Note that thermal setting may be further carried out for the purpose of imparting dimensional stability after stretching. The thermal setting can be carried out by a known means, and examples thereof include a method in which the multilayer structure (in the form of a stretched film) is subjected to a heat treatment at a temperature of usually from 80 to 180°C and preferably from 100 to 165°C for an approximate time of usually from 2 to 600 seconds while the multilayer structure is kept in a tensioned state.

### Multilayer Structure Applications

The present multilayer structure can be suitably used as a packaging material for various packaging containers and packaging films for general food products, as well as sauces and seasonings such as mayonnaise and dressings, fermented food products such as miso, salad oils and other oil-and-fat food products, beverages, cosmetics, and pharmaceuticals.

### Examples

Hereinafter, specific embodiments of the present disclosure will be described in more detail with reference to examples, but the present disclosure is not limited to the following examples as long as the gist of the present disclosure is not departed from. Values of various production conditions and evaluation results in the following examples have significance as preferable values of upper limits or lower limits in the embodiments of the present disclosure, and a preferable range may be a range defined by a combination of the value of an upper limit or lower limit described above and a value in the following examples or values between the examples.

The materials used in the following examples and comparative examples are as follows.

### EVOH

· "SOARNOL (trade name) ET3803RB" available from Mitsubishi Chemical Corporation (ethylene unit content of 38 mol%, MFR (210°C, load of 2160 g) of 4.0 g/10 minutes, density of 1.17 g/cm³)

### Polyethylene Resin

· B1: "INNATE (trade name) ST50" available from The Dow Chemical Company (linear low-density polyethylene, copolymerization component having 8 carbon atoms, density of 0.918 g/cm³, MFR (190°C, load of 2160 g) of 0.85 g/10 minutes, weight average molecular weight (when calibrated with polystyrene) of 251000)
· B2: "INNATE (trade name) TH60" available from The Dow Chemical Company (linear low-density polyethylene, copolymerization component having 8 carbon atoms, density of 0.912 g/cm³, MFR (190°C, load of 2160 g) of 0.85 g/10 minutes, weight average molecular weight (when calibrated with polystyrene) of 253000)
· B3: "EXCEED (trade name) XP 8784" available from Exxon Mobil Corporation (linear low-density polyethylene, copolymerization component having 6 carbon atoms, density of 0.914 g/cm³, MFR (190°C, load of 2160 g) of 0.80 g/10 minutes, weight average molecular weight (when calibrated with polystyrene) of 269000)
· B4: "EXCEED (trade name) 1012MA" available from Exxon Mobil Corporation (linear low-density polyethylene, copolymerization component having 6 carbon atoms, density of 0.912 g/cm³, MFR (190°C, load of 2160 g) of 1.0 g/10 minutes, weight average molecular weight (when calibrated with polystyrene) 258000)
· B5: "ELITE (trade name) 5400G" available from The Dow Chemical Company (linear low-density polyethylene, copolymerization component having 8 carbon atoms, density of 0.916 g/cm³, MFR (190°C, load of 2160 g) of 1.0 g/10 minutes, weight average molecular weight (when calibrated with polystyrene) of 228000)
· B6: "EXCEED (trade name) 2018MA" available from Exxon Mobil Corporation (linear low-density polyethylene, copolymerization component having 6 carbon atoms, density of 0.918 g/cm³, MFR (190°C, load of 2160 g) of 2.0 g/10 minutes, weight average molecular weight (when calibrated with polystyrene) of 208000)
· B7: "NOVATEC (trade name) UF641" available from the Japan Polyethylene Corporation (linear low-density polyethylene, copolymerization component having 4 carbon atoms, density of 0.927 g/cm³, MFR (190°C, load of 2160 g) of 2.1 g/10 minutes, weight average molecular weight (when calibrated with polystyrene) of 220000)
· B8: "Anteo FK2715" available from Borouge Pvt., Ltd. (linear low-density polyethylene, copolymerization components having 4 and 6 carbon atoms, density of 0.927 g/cm³, MFR (190°C, load of 2160 g) of 1.3 g/10 minutes, weight average molecular weight (when calibrated with polystyrene) of 240000)

Note that the weight average molecular weights of the polyethylene resins B1 to B8 are values measured by the following method.

### Measurement of Weight Average Molecular Weight of Polyethylene Resin

Each of the polyethylene resins B1 to B8 was weighed and dissolved in 1,2,4-trichlorobenzene by stirring for 1 hour at 140°C. High-temperature GPC measurements were carried out at 140°C using the dissolved samples. A calibration curve was prepared using standard polystyrenes (product numbers: 0005204, 0005205, 0005206, 0005207, 0005208, 0005209, 0005210, 0005211, 0005212, 0005213, 0005214, 0005215, 0005218, 0005220, and 0005221) available from Tosoh Corporation. Accordingly, the resulting values are the molecular weight when calibrated with polystyrene.

### Adhesive Resin

· "MODIC (trade name) M512" available from Mitsubishi Chemical Corporation (density of 0.90 g/cm³, MFR (190°C, load of 2160 g) of 1.0 g/10 min)

### Example 1

### Production of Multilayer Structure

A multilayer structure (film) of a B1 layer (40 µm) / an adhesive resin layer (5 µm) / an EVOH layer (10 µm) / an adhesive resin layer (5 µm) / and a B1 layer (40 µm) was fabricated using the EVOH, the B1, and the adhesive resin described above and a 4-type, 5-layer multilayer cast molding machine.

The molding conditions were as follows.

### Molding Conditions

· B1 layer: Φ 40 mm single-screw extruder (barrel temperature of 210°C)
· Adhesive resin layer: Φ 32 mm single-screw extruder (barrel temperature of 210°C)
· EVOH layer: Φ 40 mm single-screw extruder (barrel temperature of 220°C)
· Die: 4-type, 5-layer feed block type T-die (die temperature of 220°C)
· Take-up speed: 6.5 m/min
· Roll temperature : 80°C

### Production of Single-Layer Film with Thickness of 30 µm

A 30 µm single-layer film (polyethylene resin layer) of B1 was fabricated using the abovementioned B1 and a 5-type, 5-layer inflation molding machine.

The film forming conditions were as follows.

### Film Forming Conditions

· Φ 20 mm single-screw extruder × 5 (barrel temperature of 230°C)
· Die temperature: 220°C
· Take-up speed: 2.5 m/min

### Examples 2 to 4 and Comparative Examples 1 to 4

Multilayer structures and single-layer films were produced in the same manner as in Example 1 with the exception that the type of the polyethylene resin was changed to those described in Table 1 below.

The multilayer structures and single-layer films of Examples 1 to 4 and Comparative Examples 1 to 4 were evaluated for impact strength and image clarity by the following methods. The evaluation results are presented in Table 1 below.

Impact Strength (Dart Impact)
Impact Strength B of Polyethylene Resin Layer

In accordance with JIS K7124-1, a dart impact tester (available from Toyo Seiki Seisaku-sho, Ltd.) was used. A weight was attached to a stainless steel dart (Φ 50 mm, 250 g), and the dart was dropped onto the single-layer film from a height of 1.50 m. The appearance of the single-layer film after the drop of the dart was visually confirmed, and the maximum mass of the weight that did not produce the observable film rapture was defined as the dart impact strength of the single-layer film.

### Impact Strength A of Multilayer Structure

In accordance with JIS K7124-1, with a dart impact tester (available from Toyo Seiki Seisaku-sho, Ltd.), a weight was attached to an aluminum dart (Φ 38mm, 32 g), and the dart dropped from a height of 0.66 m onto the multilayer structure. The appearance of the multilayer structure after the dart was dropped was visually confirmed, and the maximum mass of the weight that did not produce the observable structure rapture was defined as the dart impact strength of the multilayer structure.

### Image Clarity

The image clarity of the multilayer structure was measured by a transmission method in accordance with JIS K 7374 "Plastics - Determination of Image Clarity". The film test piece was measured with the film machine direction oriented in the vertical direction. As the measuring instrument, the ICM-1 image clarity meter available from Suga Test Instruments Co., Ltd. was used. An optical comb having a width of 0.25 mm was used.

**Table 1**

| | Polyethylen e resin | Density [g/cm³] of polyethylene resin | Weight average molecular weight of polyethylene resin | Impact strength B [g] of polyethylene resin layer (B) | Impact strength A [g] of multilayer structure | Image clarity [%] of multilayer structure |
|---|---|---|---|---|---|---|
| Ex. 1 | B1 | 0.918 | 251000 | 1090 | 410 | 14.6 |
| Ex. 2 | B2 | 0.912 | 253000 | 1150 | 440 | 30.3 |
| Ex. 3 | B3 | 0.914 | 269000 | 1190 | 420 | 18.3 |
| Ex. 4 | B4 | 0.912 | 258000 | 1290 | 470 | 16.3 |
| Comp. Ex. 1 | B5 | 0.916 | 228000 | 135 | 290 | 10.4 |
| Comp. Ex. 2 | B6 | 0.918 | 208000 | 120 | 300 | 2.3 |
| Comp. Ex. 3 | B7 | 0.927 | 220000 | 0 | 150 | 2.1 |
| Comp. Ex. 4 | B8 | 0.927 | 240000 | -* | 200 | 6.8 |

| | | | | | | |
|---|---|---|---|---|---|---|
| * A notation of "-" indicates not measured. | | | | | | |

It is clear that the multilayer structures of Examples 1 to 4, which are configured within the ranges stipulated by the present disclosure, are excellent in image clarity in comparison with the multilayer structures of Comparative Examples 1 to 4, which are outside of the ranges stipulated by embodiments of the present disclosure.

It is presumed that when the physical properties of the multilayer structure are within the ranges stipulated by embodiments of the present disclosure, the moldability is good, and the image clarity of the multilayer structure is excellent.

Specific embodiments of the present disclosure were described in the above examples, but the above examples are merely illustrative and are not to be construed as limiting. Various modifications apparent to those skilled in the art are intended to be within the scope of the present disclosure.

### Industrial Applicability

The present multilayer structure has excellent image clarity, and thus can be suitably used as a packaging material for various packaging containers and packaging films for general food products, and for seasonings such as mayonnaise and dressings, fermented food products such as miso, salad oils and other oil-and-fat food products, beverages, cosmetics, and pharmaceuticals.

## Claims

1. A multilayer structure comprising:
an ethylene-vinyl alcohol copolymer layer (A); and
a polyethylene resin layer (B),
wherein
the polyethylene resin layer (B) comprises a polyethylene resin having a density of from 0.850 to 0.920 g/cm³,
the polyethylene resin in the polyethylene resin layer (B) has a content greater than 80 mass%, and
the multilayer structure has an impact strength A equal to or greater than 350 g, the impact strength A being a value determined by a dart impact method A and calculated in accordance with JIS K7124-1.

2. A multilayer structure comprising:
an ethylene-vinyl alcohol copolymer layer (A); and
a polyethylene resin layer (B),
wherein
the polyethylene resin layer (B) comprises a polyethylene resin having a density of from 0.850 to 0.920 g/cm³,
the polyethylene resin in the polyethylene resin layer (B) has a content greater than 80 mass%, and
the polyethylene resin contained in the polyethylene resin layer (B) has a weight average molecular weight of 230000 or greater when calibrated with polystyrene.

3. A multilayer structure comprising:
an ethylene-vinyl alcohol copolymer layer (A); and
a polyethylene resin layer (B),
wherein
the polyethylene resin layer (B) comprises a polyethylene resin having a density of from 0.850 to 0.920 g/cm³,
the polyethylene resin in the polyethylene resin layer (B) has a content greater than 80 mass%, and
the polyethylene resin layer (B) has an impact strength B equal to or greater than 500 g, the impact strength B being a value determined by a dart impact method B including subjecting a test piece to a measurement in accordance with JIS K7124-1, the test piece made of a single-layer film having a thickness of 30 µm and a composition that is the same as that of the polyethylene resin layer (B).

4. The multilayer structure according to any one of claims 1 to 3, wherein the polyethylene resin is a linear low-density polyethylene.

5. The multilayer structure according to any one of claims 1 to 3, wherein the polyethylene resin includes a copolymerization component, and the copolymerization component includes 4 or more carbon atoms.

6. The multilayer structure according to any one of claims 1 to 3, further comprising an adhesive resin layer (C).

7. The multilayer structure according to any one of claims 1 to 3, further comprising an additional layer (D) on at least one of outermost layers of the multilayer structure, wherein the polyethylene resin layer (B) is provided between the additional layer (D) and the ethylene-vinyl alcohol copolymer layer (A).

8. The multilayer structure according to any one of claims 1 to 3, wherein the multilayer structure includes no layer containing, as a main component, a polyamide resin.

9. A container including the multilayer structure according to any one of claims 1 to 3.

10. A food packaging container including the multilayer structure according to any one of claims 1 to 3.
